# EUROPEAN PATENT SPECIFICATION

(11) **EP 2 346 347 B1**
(45) Date of publication and mention of the grant of the patent: **12.11.2014**
(21) Application number: 09776191.0
(22) Date of filing: 02.09.2009
(51) Int. Cl.: A23G 4/08, C08G 63/12, C08G 63/20

(54) **USE OF A POLYESTER AS AN ELASTOMER COMPONENT FOR GUM BASES**
VERWENDUNG EINES POLYESTERS ALS ELASTOMERKOMPONENTE FÜR KAUGUMMIGRUNDMASSE
UTILISATION D'UN POLYESTER EN TANT QUE COMPOSANT ÉLASTOMÈRE POUR BASES DE GOMME

(30) Priority: 05.09.2008 EP 08163786
(43) Date of publication of application: 27.07.2011
(73) Proprietor: Gumlink A/S, 7100 Vejle (DK)
(72) Inventor: YAMAMOTO, Motonori, 68199 Mannheim (DE); MACH, Helmut, 69115 Heidelberg (DE)
(74) Representative: Jeppesen, Jens
(86) International application number: PCT/DK2009/000195
(87) International publication number: WO 2010/025725

(56) References cited:
- US-A1- 2007 043 200
- US-B1- 6 444 782
- KIM D.Y., RHEE Y.H.: "Biodegradation of microbila and synthetic polyesters by fungi" APPLIED MICROBIOLOGY AND BIOTECHNOLOGY, vol. 61, 2003, pages 300-308, XP002500034

## Description

The present invention relates to the use of a polyester as an elastomer component for gum bases. The application also describes a method of making gum bases which comprise such polyesters.

Conventional gum bases for chewing gums are based on synthetic thermoplastic elastomers, such as polyvinyl ethyl ether, polyvinyl isobutyl ether, polyisobutene, isoprene-isobutene copolymers (butyl rubber), styrene-butadiene copolymers (SBR rubber) and polyvinyl acetate (PVA). These thermoplastic polymers function as elastomer components in the gum base. Disadvantages with these polymers are their stickiness and poor biodegradability. Heedlessly discarded chewing gums are an ever-present irritation, since, once they are stuck to a surface, they may generally be removed only with great difficulty. Also, their decomposition by environmental factors, such as rain, sunlight, mechanical abrasion and microbial degradation, is so slow that the problem of their removal is not solved inherently.

US 6,013,287 describes a chewing gum base which is based on an endgroup-capped polyester and is said not to be very sticky. The alcohol component of the polyester is selected from glycerol, propylene glycol and 1,3-butanediol and the acid component is selected from fumaric acid, adipic acid, malic acid, succinic acid and tartaric acid. The polyester endgroups are capped with a monofunctional alcohol or a monocarboxylic acid. However, it is a disadvantage that such polyesters are virtually not degraded under customary environmental influences.

EP 0711506 describes a biodegradable chewing gum which, in the gum base, comprises a biodegradable polyester or a biodegradable polycarbonate. The polyester or polycarbonate is based on condensed cyclic esters or carbonates, such as lactide, glycolide, 8-valerolactone, β-propiolactone, γ-caprolactone and trimethyl carbonate. However, a disadvantage with such polyesters and polycarbonates is that they have poor chewing properties. Furthermore, these polyesters have a low stability to hydrolysis, so that the chewing gum rapidly loses its taste properties and tactile properties.

EP 1406505 describes branched polymers mainly based on biodegradable and/or hydrozable ester groups as gum base. However, a disadvantage with the gum bases described is that they are difficult to produce. Furthermore, these gum bases have a low stability under the conditions of stocking and/or under physiological conditions.

WO 2004/096886 describes amorphous polyesters and their use as gum bases which are not sticky, biodegradable and can be broken down by UV light. Those polyesters are formed from at least one aromatic dicarboxylic acid, at least one aliphatic dicarboxylic acid and at least one aliphatic diol, which is selected from branched aliphatic C₃-C₁₂-diols, those diols having a saturated cyclic partial structure and/or at least one ether group. Additionally these polyesters might comprise in condensed form at least one compound having at least three groups capable of ester formation. However, a disadvantage with such gum bases is that without an exposition to UV-light they are only slowly being degraded.

US 6,017,566 describes gum bases including an edible polyester that is produced through a reaction of glycerol and at least one acid selected from the group of citric acid, fumaric acid, adipic acid malic acid, succinic acid, suberic acid, sebacic acid, dodecanedioic acid, glucaric acid, glutamic acid, glutaric acid, azelaic acid and tartaric acid. These polyesters do not have thermoplastic properties and thus their processability is poor. Furthermore, their production is difficult. In addition they possess poor chewing properties and biodegradability.

US 6,444,782 describes a process for making a high molecular weight pre-gel for a crosslinked branched polyester.

Biodegradation of microbial and synthetic polyesters by fungi in APPLIED MICROBIOLOGY AND BIOTECHNOLOGY vol. 61, 2003, by Kim D.Y. and Rhee Y.H. relates to the biodegradation of synthetic polyesters

It is an object of the present invention to provide polymers which are suitable as elastomer component for gum bases, which have a good processability, i.e. which can easily be used in thermoplastic manufacturing processes of such gum bases, which have good chewing properties, especially those properties are related to good elastomeric properties, and which are biodegradable. Furthermore, the polymer should at the same time exhibit good stability to hydrolysis.

We have found that these objects are achieved by a polyester which comprises as polyester-forming components in condensed form
a) at least one aliphatic dicarboxylic acid,
b) at least one aliphatic diol and
c) at least one compound having at least three groups capable of ester formation in an amount of from 0.1 to 10.0 % by weight, in particular 0.2 to 5 % by weight, or more preferably 0.3 to 3 % by weight, especially 0.5 to 2.5 % by weight, based on the total weight of the polyester,
wherein the polyester comprises the components a) and b) in an amount of at least 80 % by weight, e.g. from 80 to 99.9 % by weight, preferably at least 90 % by weight, e.g. from 90 to 99.8 % by weight, in particular at least 95 % by weight, e.g. from 95 to 99.8 % by weight, more preferably at least 97 % by weight, e.g. 97 to 99.7 % by weight, especially at least 97.5 % by weight, e.g. 97.5 to 99.5 % by weight, based on the total weight of the polyester.

The invention thus relates to the use of such a polyester as a elastomer component for gum bases. In addition a method of making gum bases comprising such a polyester is described.

For the purposes of the present invention, the ranges of amounts given for the polyester-forming components in "% by weight" generally refer to the weight of the free components , i.e. the weight of components a), b) and c) before condensation.

The polyesters according to the present invention preferably are amorphous. For the purposes of the present invention, "amorphous" means polyesters which contain less than 5 % by weight, preferably less than 2 % by weight, of crystalline fractions, based on the total weight of the polyester. In particular, the proportion of crystalline constituents (where present at all) is below the customary limits of detection. For the purposes of the present invention, crystalline constituents are those which, during differential scanning calorimetry (DSC), exhibit melting and crystallization peaks (endothermal phase transition). Accordingly, amorphous polyesters are those which in DSC measurements have no measurable melting peaks or crystallization peaks. The DSC measurement for determining the amorphous state of the polyester is based on the following method: an Exstet DSC 6200R from Seiko is used. From 10 to 15 mg of the sample under test is heated under a nitrogen atmosphere at a heating rate of 20°C/min from - 100°C to 200°C and observations are made as to whether melting peaks occur. The sample is then immediately cooled at a cooling rate of 20°C/min from 200°C to -100°C and observations are made as to whether crystallization peaks occur. The reference used is a corresponding blank crucible.

The polyesters used according to the invention are biodegradable. Biodegradability according to EN 13432 means that the polyesters break down under environmental influences in a reasonable and detectable time period. The breakdown can be by hydrolysis and/or oxidation and is predominantly caused by the action of microorganisms, such as bacteria, yeasts, fungi and algae. The biodegradability may be determined, for example, by mixing polyester with compost and storing it for a defined time. In accordance with ASTM D 5338, ASTM D 6400 and EN 13432, CO₂-free air is passed, for example, through matured compost during the composting process and this is subjected to a defined temperature program. In this case the biodegradability is defined from the ratio of net CO₂ release of the sample (after deducting the CO₂ release by the compost without sample) to the maximum CO₂ release of the sample (calculated from the carbon content of the sample). Biodegradable polyesters generally, even after only a few days of composting, exhibit marked signs of breakdown, such as fungal growth, cracking and pitting.

The biodegradability may also be determined by incubating the polyester with a defined amount of a suitable enzyme at a defined temperature for a fixed time period and then determining the concentration of the organic breakdown products dissolved in the incubation medium. Such a method of determination has, for example, been described by Y. Tokiwa et al. in American Chemical Society Symposium 1990, Chapter 12, "Biodegradation of Synthetic Polymers Containing Ester Bonds". The polyester can be incubated with a predetermined amount of a lipase from, for example, Rhizopus arrhizus, Rhizopus delemar, Achromobacter sp., Candida cylindracea or Candida antartica for several hours at from 30 to 37 °C, followed by measurement of the dissolved organic carbon (DOC) value of the reaction mixture freed from insoluble constituents. For the purposes of the present invention, biodegradable means polyesters which, after the enzymatic treatment with a lipase from Candida antartica (Novozyme^{®} 435) at 37°C, give, after 16 h, a DOC value which is at least 10 times higher than that of the same polyester which was not treated with the enzyme.

The aliphatic dicarboxylic acid a) is generally selected from α,ω-alkane dicarboxylic acid having from 4 to 40 carbon atoms, preferably 4 to 18 carbon atoms, such as succinic acid, 2-methylsuccinic acid, glutaric acid, 2-methylglutaric acid, 3-methylglutaric acid, 2,2-dimethylglutaric acid, adipic acid, pimelic acid, suberic acid, azelaic acid and sebacic acid, undecanoic acid, dodecanoic acid, dimer fatty acids, such as Empol^{®} 1061, and mixtures thereof. Preferred aliphatic dicarboxylic acids are succinic acid, glutaric acid, adipic acid, pimelic acid, azelaic acid and sebacic acid and mixtures thereof. In particular, the aliphatic dicarboxylic acid is selected from succinic acid,adipic acid and sebacic acid or a mixture of aliphatic dicarboxylic acids which contains at least 80% by weight, preferably at least 90% by weight, and in particular at least 95% by weight of succinic acid, of adipic acid or sebacic acid, based on the total weight of the mixture, and at least one of the abovementioned aliphatic α,ω-alkane dicarboxylic acid having from 4 to 12 carbon atoms.

The dicarboxylic acid a) can be used in the preparation process either in the form of the free acid or as ester-forming derivatives. Ester-forming derivatives are, for example, the anhydrides or halides of these acids or their esters, for example with C₁-C₆-alkanols, such as methanol, ethanol, n-propanol, isopropanol, n-butanol, sec-butanol, isobutanol, tert-butanol, n-pentanol, isopentanol or n-hexanol. The same applies to component c) if this compound comprises at least one carboxyl groups.

Aliphatic diols b) which can be used are unbranched aliphatic C₂-C₁₂-diols, branched aliphatic C₃-C₁₂-diols, those diols having a saturated cyclic partial structure and/or at least one ether group.

Examples of suitable unbranched aliphatic C₃-C₁₂-diols are ethylene glycol, 1,3-propanediol, 1,4-butanediol, 1,5-pentanediol, 1,6-hexanediol 1,7-heptandiol, 1,8-octandiol, 1,9-nonandiol, 1,10-decandiol, 1,11-undecandiol and 1,12-dodecandiol.

Examples of suitable branched aliphatic C₃-C₁₂-diols are propan-1,2-diol, butane-1,2-diol, butane-1,3-diol, 2,2-dimethylpropane-1,3-diol (neopentyl glycol), 2,4-dimethyl-2-ethylhexane-1,3-diol, 2-ethyl-2-butylpropane-1,3-diol, 2 ethyl-2-isobutylpropane-1,3-diol, 2,2,4-trimethylhexane-1,6-diol and the like.

Examples of suitable aliphatic diols having a saturated cyclic partial structure are 2,2,4,4-tetramethyl-1,3-cyclobutanediol, 1,2-cyclopentanediol, 1,3-cyclopentanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, isosorbide, isoidide and the like.

Examples of suitable diols having at least one ether group are diethylene glycol, triethylene glycol, tetraethylene glycol, pentaethylene glycol, hexaethylene glycol, dipropylene glycol, triprophylene glycol, tetrapropylene glycol, pentapropylene glycol, hexapropylene glycol, oligomers of tetrahydrofurane and the like.

Preferred aliphatic diols b) are propan-1,2-diol, 2,2-dimethylpropane-1,3-diol, diethylene glycol, triethylene glycol, tetraethylene glykol and 1,4-cyclohexanedimethanol.

The molar ratio of aliphatic dicarboxylic acid a) to aliphatic diol b) is preferably from 0.95 : 1 to 1.05 : 1, particularly preferably from 0.99 : 1 to 1.01 : 1.

According to the present invention, the polyester additionally contains, as repeating unit, in condensed form, at least one compound c) having at least three groups capable of ester formation.

Such compounds c), referred to hereinafter as branchers, preferably contain from 3 to 10 functional groups, particularly preferably from 3 to 6 functional groups, which are capable of forming ester bonds. In particular, these groups are hydroxyl groups and carboxyl groups. Particularly preferred branchers c) therefore contain from 3 to 6 hydroxyl groups and/or carboxyl groups.

Preferably these compounds are selected from tartaric acid, citric acid, malic acid, trimethylolpropane, trimethylolethane, pentaerythritol, polyethertriols, glycerol, trimesic acid, trimellitic acid, pyromellitic acid and hydroxyisophthalic acid. Particularly preferred branchers c) are glycerol or pentaerythritol. Most preferred is glycerol.

The polyester contains the brancher c) in an amount from 0.1 to 10 % by weight, preferably from 0.1 to 5.0 % by weight, and in particular of from 0.2 to 2.5 % by weight, based on the total weight of the polyester.

Furthermore, the polyester can comprise one or more aromatic dicarboxylic acids in condensed form. These aromatic dicarboxilic acids may be present in an amount of not more than 20 % or 19.9 % by weight, preferably not more than 10 % or 9.8 % by weight and in particular less than 5 % or 4.8 % by weight based on the total amount of component a). Preferably, the polyester contains substantially no aromatic dicarboxylic acid, i.e. less than 1 % by weight, in particular less than 0.5 % by weight or less than 0.1 % by weight, based on the total weight of the polyester.

Suitable aromatic dicarboxylic acids contain two carboxyl groups which are bound to one aromatic system. Preferably, the aromatic system is a carboaromatic, such as phenyl or naphthyl. In the case of polynuclear aromatics, the two carboxyl groups can be bound to the same ring or different rings. The aromatic system can also have one or more alkyl groups, for example methyl groups. The aromatic dicarboxylic acid is generally selected from aromatic dicarboxylic acids having from 8 to 12 carbons, such as phthalic acid, isophthalic acid, terephthalic acid, 1,5- and 2,6-naphthalenedicarboxylic acid. Preferred aromatic dicarboxylic acids are terephthalic acid, isophthalic acid and phthalic acid and mixtures thereof. In particular, the aromatic dicarboxylic acid is terephthalic acid or a mixture of aromatic dicarboxylic acids which comprises at least 80% by weight, preferably at least 90% by weight, and in particular at least 95% by weight, of terephthalic acid, based on the total weight of the mixture, and at least one of the abovementioned aromatic dicarboxylic acids having from 8 to 12 carbons.

If the polyester comprises such aromatic dicarboxylic acids, these are preferably present in an amount of 0.01 to 5% by weight, in particular from 0.1 to 5.0 % by weight, based on the total weight of the polyester, replacing the amount of aliphatic dicarboxylic acid

Furthermore, the polyester can contain one or more chain extenders in condensed form. Suitable chain extenders are, in particular compounds containing two or more epoxide groups, such as glycidyl esters, glycidyl ethers or glycidyl (meth)acrylates, isocyanates, divinyl ethers and bisoxazolines.

If the polyester does contain such chain extenders, these are present in an amount of preferably from 0.01 to 5% by weight, in particular preferably from 0.05 to 4 % by weight, based on the total weight of the polyester. Preferably, the polyester contains substantially no chain extender, i.e. less than 0.1 % by weight, based on the total weight of the polyester.

Preferably, the polyester is made up of at least 95 % by weight, particularly preferably at least 96 % by weight, and in particular at least 98 % by weight, for example from 98 to 99.9 % by weight, of the components a), b) and c).

The polyester preferably has a glass transition temperature Tg of from -60 °C to 30 °C, particularly preferably from -50°C to 10 °C. The Tg values specified were determined by DSC measurements. The DSC measurements were carried out in accordance with EN ISO 11357-2.

Furthermore, the polyester is generally characterized by a viscosity number in the range of from 50 to 500 mL/g, preferably from 100 to 300 mL/g, and in particular from 140 to 250 mL/g (measured in o-dichlorobenzene/phenol (weight ratio 50 : 50) at a concentration of 0.5 % by weight polyester at a temperature of 25 °C, in accordance with EN ISO 1628-1).

Furthermore, the polyester is generally characterized by a polydispersity index (M_{w}/Mₙ) of at least 2 , preferably at least 3 , in particular at least 5, more preferably at least 7, especially a least 10, wherein M_{w} is the weight average molecular weight and Mₙ is the number average molecular weight. The polydispersity index can be determined by gel permeation chromatography (GPC) according to DIN 55672-1. The polydispersity index will generally not exceed 50, preferably 40 in particular 30 and is frequently in the range from 2 to 50, preferably from 3 to 50, in particular from 5 to 50 more preferably from 7 to 40, especially from 10 to 30.

The polyester is prepared by methods known per se, as are described, for example, in Sorensen and Campbell, "Preparative Methods of Polymer Chemistry", Interscience Publishers, Inc., New York, 1961, pages 111 to 127; Encycl., of Polym. Science and Eng., Vol. 12, 2nd Edition John Wiley & Sons, 1988, pages 1 to 75, Kunststoff-Handbuch, Vol. 3/1, Carl Hanser Verlag, Munich, 1992, pages 15 to 32; WO 92/13019; EP-A 568593; EP-A 565235; EP-A 28687; EP-A 792309 and EP-A 792310.

Depending on whether an excess of acid endgroups or hydroxyl endgroups is desired, either the acid components a) or the diol component b) can be used in excess, preferably within the ranges given above.

One example of suitable reaction conditions is the reaction of the polyester-forming components in molten state first at temperatures in the range from 160 to 230 °C at atmospheric pressure, preferably under an insert gas atmosphere, and then, to complete the polycondensation up to the desired molecular weight, at a temperature of from 180 to 260 °C and at reduced pressure (see Tsai et al., Polymer 1990, 31, 1589).

According to the invention, the polyester is an elastomeric component of a gum base suitable for chewing gum compositions.

Gum base is generally the term used for the water-insoluble indigestible chewing gum component which becomes plastic on chewing (see Römpp Chemie-Lexikon, 9th Edition, Georg Thieme Verlag, Stuttgart, New York, p. 2181). The gumbase generally contains at least one polymer having elastomeric properties as elastomer component. Customarily, the gum base, in addition to the elastomer component, contains other components, such as resins, waxes, fats and oils, which generally act as plasticizers and emulsifiers and enhance the tactile properties, such as chewability or mouth feel, , colorants, whiteners and antioxidants, which components hereinafter are referred to as additives, and in addition inorganic fillers.

According to the invention, the gum base will generally contain at least one polyester, as defined herein and optionally one or more further ingredients typical of a gum base, such as additive and inorganic filler. The polyester as defined herein may be the only elastomeric component or may form a part of the elastomeric component of the gum base. Preferably, the polyester as defined herein is the only elastomer component of the gum base or accounts to at least 40 % by weight, in particular at least 60 % by weight, especially at least 80 % by weight, of the elastomer component of the gum base, the remainder of the elastomer component being other polymers having elastomer properties such as polyvinyl acetate, zein hydrolysate or elastomeric polyesters as described e.g. WO 2004/096886, EP 711506 or EP 1406505.

Preferably, the gum base contains the polyester in an amount of from 20 to 90 % by weight, particularly preferably from 20 to 70 % by weight, and in particular from 20 to 50 % by weight, based on the total weight of the gum base.

Suitable resins are, for example, colophony derivatives, such as pentaerythritol esters of colophony, hydrogenated or partially hydrogenated colophony and glycerol esters of colophony, hydrogenated, partially hydrogenated, partially dimerized or polymerized colophony, and in addition terpene resins, such as polymerized α- or β-pinene. If the gum base contains resins, these are generally present in an amount of from 5 to 30 % by weight, based on the total weight of the gum base.

Suitable waxes are, for example, plant waxes, such as candelilla wax and carnauba wax, animal waxes, such as beeswax and lanolin, and petrochemical waxes, such as paraffin waxes and microcrystalline waxes. If the gum base contains waxes, these are generally present in an amount of from 1 to 15 % by weight, based on the total weight of the gum base.

Suitable fats and oils are, for example, tallow, hydrogenated tallow, hydrogenated and partially hydrogenated vegetable oils, such as soybean oil, sunflower oil, corn oil, rapeseed oil, peanut oil, palm oil and cottonseed oil, cocoa butter, glycerol monostearate, glycerol triacetate, lecithin, fatty acid mono-, di- and triglycerides, acetylated monoglycerides, fatty acids such as stearic acid, palmitic acid, oleic acid and linoleic acid, and also mixtures thereof. If the gum base contains fats and oils, these are generally present in an amount of from 5 to 30 % by weight, based on the total weight of the gum base.

Suitable fillers are, for example, magnesium carbonate and calcium carbonate, ground limestone, talc, silicates, such as magnesium silicates and aluminum silicates, clay, alumina, titanium oxide, mono-, di- and tricalcium phosphate, cellulose polymers and mixtures thereof. If the gum base contains fillers, these are generally present in an amount of from 5 to 30 % by weight, based on the total weight of the gum base.

Suitable colorants and whiteners are those which are suitable for food use, for example fruit and vegetable extracts, titanium dioxide and mixtures thereof. If the gum base contains pigments and bleaches, these are generally present in an amount of from 0.01 to 1 % by weight, based on the total weight of the gum base.

Suitable antioxidants are those which are suitable for food use, for example vitamin C, vitamin E, butylated hydroxyanisole, butylated hydroxytoluene and propyl gallate. If the gum base contains antioxidants, these are generally present in an amount of from 0.01 to 1.0 % by weight, based on the total weight of the gum base.

In addition, the gum base may contain natural elastomers, such as chicle, jelutong, lechi caspi, gutta hang kang, gutta soh, gutta siak, massaranduba balata, massaranduba chocolate and the like. If the gum base contains natural elastomers, these are generally present in an amount of from 1 to 30 % by weight, based on the total weight of the gum base.

In a specific embodiment, the gum base contains no components of animal origin, in particular no animal waxes, fats or oils, so that it complies with the requirements for kosher foods.

The invention also describes a method of making a gum base. The gum base can be prepared by conventional processes of the prior art for preparing gum bases, using a elastomer component comprising a polyester as defined herein, instead or as a mixture with conventional elastomer components. The gum base can be prepared, for example by intimate mixing of the components.

The gum bases comprising a polyester as defined herein are used in chewing gum compositions. These chewing gum compositions comprise at least one gum base as defined above and at least one further ingredient typical of a chewing gum composition, such as plasticizers, sweeteners or flavourings.

Customarily, a chewing gum composition comprises a water-insoluble gum base, at least one water-soluble ingredient and flavourings (see e.g. US 6,013,287, US 6,017,566 or EP 0711506).

The water-soluble component generally comprises plasticizers and sweeteners. The plasticizers are added to the gum base in order to enhance chewability and the mouth feel of the chewing gum composition.

Examples of suitable plasticizers are glycerol, lecithin, triacetin (triacetylglycerol), the trialkyl-esters of citric acid or acylated citric acid and mixtures thereof. Plasticizers and emulsifiers which can be used are, in addition, sorbitol, hydrogenated starch hydrolysates, corn syrup and mixtures thereof.

Sweeteners comprise not only sugars, but also sugar substitutes and high intensity artificial sweeteners.

Suitable sugars are, for example, sucrose, dextrose, maltose, dextrin, invert sugar, glucose, fructose, galactose and the like and also mixtures thereof.

Examples of suitable sugar substitutes are sugar alcohols, such as sorbitol, mannitol, isomalt (palatinit), xylitol, hydrogenated starch hydrolysates, maltitol, lactitol and the like and also mixtures thereof.

High intensity artificial sweeteners are, for example, Sucralose, aspartame, acesulfame salts, alitame, saccharine and salts thereof, cyclamates, glycyrrhizin, dihydrochalcones, thaumatin, monellin, dulcin, stevioside and the like.

Suitable flavourings are generally water-insoluble and comprise vegetable oils and fruit oils, such as citrus oil, fruit essences, peppermint oil, spearmint oil, other mint oils, clove oil, wintergreen oil, anise oil and the like. Artificial flavourings can also be used.

Furthermore the chewing gum composition according to the present invention may contain physiologically active ingredients such as caffeine, nicotine or fluorine compounds, such as aluminium fluoride.

Preferably, the gum base is present in the chewing gum composition in an amount of from 5 to 95 % by weight, particularly preferably from 10 to 50 % by weight, and in particular from 20 to 35 % by weight, based on the total weight of the chewing gum composition.

Preferably, the water soluble components are present in the chewing gum in an amount of from 3 to 94.9 % by weight, particularly preferably from 49 to 89.5 % by weight, based on the total weight of the chewing gum composition.

The flavourings are present in the chewing gum composition according to the present invention in an amount of preferably from 0.1 to 2 % by weight, particularly preferably from 0.5 to 1 % by weight, based on the total weight of the chewing gum composition.

In a specific embodiment, the chewing gum composition comprises no ingredients of animal origin, in particular no animal waxes, fats and oils, so that it complies with the requirements for kosher foods.

The chewing gum is available by conventional processes known from prior art, for example by intimate mixing of the ingredients.

Gum bases and chewing gum compositions which comprise the above-described polyester as polymer generally are easily processible in thermoplastic manufacturing processes. This might be partially due to the fact that such polyesters are virtually not crosslinked.

Furthermore gum bases and chewing gum compositions which comprise the above-described polyester as polymer virtually do not stick even to relatively rough surfaces, such as concrete, possess good stability to hydrolysis and are readily biodegraded.

The examples below are intended to illustrate the invention without restricting the scope of the invention to the examples explicitly shown.

### Examples

The viscosity number (VN) was determined in accordance with EN ISO 1628-1 from a 0.5 % by weight solution of the polyester in ortho-dichlorobenzene/phenol (weight ratio 1 : 1) at 25 °C.

The glass transition temperature was determined by differential scanning calorimetry (DSC) in accordance with ISO 11357-2.

The polydispersity index (M_{w}/Mₙ) was determined by gel permeation chromatography (GPC) in analogy to DIN 55672-1. An aliquot of 125 µL of a solution prepared from 15 mg of the polyester and 10 mL of hexafluoroisopropanol (HFIP) are subjected to GPC-analysis (eluent: HFIP + 0.05% of trifluoro acetic acid potassium salt; column: combination of Shodex HFIP-800P, HFIP-803 and HFIP-803; elution rate: 0.5 ml/min). The polyesters are detected by UV (280 nm). Calibration is performed with PMMA-standards having a molecular weight from 505 to 2 740 000 g/mol. Polydispersity indexes outside of this range are determined by extrapolation.

### 1. Preparation of the polyesters

### Example 1.1:

A 5 L reactor was charged with adipic acid (1461 g), diethylene glycol (1380 g), glycerol (32.4 g) and tetrabutylorthotitanate (0,34 mL). The reaction mixture was kept at 200 °C for 1 h. Water was distilled off. The temperature was raised to 250 °C and the pressure was continuously reduced to 1 mbar over a period of 3 h. The polymer obtained has a viscosity number (VN) of 173 mL/g and a glass transition temperature (Tg) of -46°C.

### Example 1.2:

A 5 L reactor was charged with adipic acid (1608 g), 1,2 propanediol (1005 g), glycerol (30.7 g) and Tetrabutylorthotitanate (0.16 mL). The reaction mixture was kept at 200°C for 1 h. Water is distilled off. The temperature was raised to 250°C and the pressure was continuously reduced to 1mbar over a period of 3 h. The polymer obtained had a VN of 254 mL/g and a Tg of -37 °C.

### Example 1.3:

A 5 L reactor was charged with succinic acid (1299 g), diethylene glycol (1518 g), glycerol (31.1 g) and tetrabutylorthotitanate (0.16 mL). The reaction mixture was kept at 200 °C for 1 h. Water was destilled off. The temperature was raised to 250 °C and the pressure was continuously reduced to 1 mbar over a period of 3 h. The polymer obtained had a VN of 214 mL/g and a Tg of -24 °C.

### Example 1.4:

A 5 L reactor was charged with succinic acid (1535 g), 1,2-propanediol (1187 g), glycerol (30.8 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 3h. The polymer obtained had a VN of 195 mL/g and a Tg of -4°C.

### Example 1.5:

A 5 L reactor was charged with succinic acid (1535 g), diethylene glycol (166 g), 1,2-propanediol (1068 g), glycerol (31.5 g) and tetrabutylorthotitanate (0.16 mL). The reaction mixture was kept at 200 °C for 1 h. Water was distilled off. The temperature was raised to 250 °C and the pressure was continously reduced to 1 mbar over a period of 3 h. The polymer obtained had a VN of 150 mL/g and a Tg of -8 °C.

### Example 1.6:

A 5 L reactor was charged with succinic acid (1535 g), diethylene glycol (331 g), 1,2-propanediol (950 g), glycerol (32.2 g) and tetrabutylorthotitanate (0.16 mL). The reaction mixture was kept at 200°C for 1 h. Water was distilled off. The temperature was raised to 250 °C and the pressure was continuously reduced to 1 mbar over a period of 3 h. The polymer obtained had a VN of 160 mL/g and a Tg of -10°C.

### Example 1.7:

A 5 L reactor was charged with succinic acid (1535 g), diethylene glycol (331 g), 1,2-propanediol (950 g), glycerol (32.2 g) and tetrabutylorthotitanate (0.16 mL). The reaction mixture was kept at 200°C for 1 h. Water was distilled off. The temperature was raised to 250 °C and the pressure was continuously reduced to 1 mbar over a period of 2 h. The polymer obtained had a VN of 80 mL/g.

### Example 1.8:

A 5 L reactor was charged with succinic acid (1535 g), diethylene glycol (331 g), 1,2-propanediol (950 g), glycerol (32.2 g) and tetrabutylorthotitanate (0.16 mL). The reaction mixture was kept at 200°C for 1 h. Water was distilled off. The temperature was raised to 250 °C and the pressure was continuously reduced to 1 mbar over a period of 2.5 h. The polymer obtained had a VN of 110 mL/g.

### Example 1.9:

A 5 L reactor was charged with succinic acid (1535 g), diethylene glycol (331 g), 1,2-propanediol (950 g), glycerol (32.2 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 3.5 h. The polymer obtained had a VN of 190 mL/g.

### Example 1.10:

A 5 L reactor was charged with succinic acid (1535 g), diethylene glycol (331 g), 1,2-propanediol (950 g), glycerol (32.2 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 3.7 h. The polymer obtained had a VN of 250 mL/g.

### Example 1.11:

A 5 L reactor was charged with succinic acid (1535 g), diethylene glycol (331 g), 1,2-propanediol (950 g), glycerol (32.2 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 4 h. The polymer obtained had a VN of 350 mL/g.

### Example 1.12:

A 5 L reactor was charged with succinic acid (1535 g), diethylene glycol (331 g), 1,2-propanediol (950 g), glycerol (10.7g) and tetrabutylorthotitanate (0.16 ml) were charged. The reaction mixture was kept at 200 °C for 1 h. Water was distilled off. The temperature was raised to 250 °C and the pressure was continuously reduced to 1 mbar over a period of 3 h.

### Example 1.13:

A 5 L reactor was charged with succinic acid (1535 g), diethylene glycol (331 g), 1,2-propanediol (950 g), glycerol (32.2 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 3 h.

### Example 1.14:

A 5 L reactor was charged with succinic acid (1535 g), diethylene glycol (331 g), 1,2-propanediol (950 g), glycerol (42.8 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 4 h.

### Example 1.15:

A 5 L reactor was charged with succinic acid (1535 g), diethylene glycol (331 g), 1,2-propanediol (950 g), glycerol (64.2 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 4 h.

### Comparative example 1 (CE.1):

A 5 L reactor was charged with terephthalic acid (748 g), adipic acid (804 g), diethylene glycol (1380 g), glycerol (33.8 g) and tetrabutylorthotitanate (0.18 mL). The reaction mixture was kept at 200 °C for 1 h. Water was distilled off. The temperature was raised to 250 °C and the pressure was continously reduced to 1 mbar over a period of 3 h. The polymer obtained had a VN of 243 mL/g and a Tg of -23 °C.

### Comparative Example 2 (CE.2):

A 5 L reactor was charged with succinic acid (1535 g), diethylene glycol (331 g), 1,2-propanediol (950 g) and tetrabutylorthotitanate (0.16 mL). The reaction mixture was kept at 200 °C for 1 h. Water was distilled off. The temperature was raised to 250 °C and the pressure was continuously reduced to 1 mbar over a period of 4 h.

### 2. Use Examples

The polyester of the invention can be easily incorporated into a gum base having the overall compositions given in table 1.

For this, the polyester was first heated in a kettle provided with mixing means, and then the filler, the resin, the fat and the wax were added in succession and the components were mixed to form a homogenous composition.

**Table 1:**

| Gum base no. | 1 | 2 | 3 | 4 | 5 | 6 | 7 | 8 |
|---|---|---|---|---|---|---|---|---|
| Polyester [% by wt.] | 25 | 45 | 55 | 40 | 45 | 60 | 60 | 60 |
| PVA [% by wt.] | 0 | 0 | 0 | 0 | 0 | 0 | 0 | 40 |
| ZH [% by wt.] | 0 | 0 | 0 | 0 | 0 | 0 | 40 | 0 |
| Resin [% by wt.] | 30 | 10 | 0 | 20 | 20 | 40 | 0 | 0 |
| Filler [% by wt.] | 20 | 20 | 20 | 15 | 10 | 0 | 0 | 0 |
| Emulsifier | 5 | 5 | 5 | 5 | 5 | 0 | 0 | 0 |
| Fat [% by wt.] | 20 | 20 | 20 | 20 | 20 | 0 | 0 | 0 |

| | | | | | | | | |
|---|---|---|---|---|---|---|---|---|
| PVA = polyvinyl acetate, ZH = zein hydrolysate | | | | | | | | |

The filler is e.g. talc. The resins are e.g. biodegradable polyester resins. The fat is e.g. hydrogenated or partially hydrogenated vegetable oil. The emulsifier is e.g. mono- and diglycerides of edible fatty acids

The polyesters of the examples show a good processability, i.e. the polyester can be easily incorporated into the gum base and a homogenous gum bases are generally obtained within 30 minutes.

The gum base can be easily formulated as chewing gums using e.g. the following gum formulae

| Formulae 1 | Formulae 2 | |
|---|---|---|
| 40.0% | 27.0% | gum base |
| 42.6% | 49.6% | sorbitol |
| 6.0% | 6.0% | xylitol |
| 9.0% | 3.0% | maltitol syrup |
| 2.0% | 2.0 | flavor |
| 0.2% | 0.2% | aspartam |
| 0.2 % | 0.2% | acesulfame |
| 0% | 5.0% | filler |
| 0% | 4.0% | wax |
| 0% | 3.0% | softener |

For this, the gum base was first heated in a kettle provided with mixing means, and then a portion of sorbitol was added and the mixture was stirred for 3 minute. The flavor was added and the mixture was stirred for further 1 minute. The remainder of sorbitol, maltitol and xylitol and optionally filler, wax and softener were successively added with stirring, the mixture was stirred and than aspartam and acesulfam were added and the mixture was stirred until it was homogenous. Then the mixture was discharged to a pan at a temperature of 40 to 48°C. The gum is then rolled and scored into pieces. The gums containing a polyester of the invention had superior chewing properties.

For evaluation of chewing properties, samples of the thus prepared chewing gums have been chewed by 10 persons and evaluated;
++ : 7 to 10 persons confirm good chewing properties;
+ : 4 to 6 persons confirm good chewing properties;
- : 0 to 3 persons confirm good chewing properties.

The biodegradability and ease of production of the polyesters from Examples 1.7 to 1.10, 1.12 to 1.14 and CE.2 have been evaluated.

### Biodegradability:

Biodegradation was determined by enzymatic degradation using Novozyme^{®} 435 (lipase from candida antartica, acrylic resin). The polyester (1 g) was incubated with Novozyme^{®} 435 (10 mg) and incubated at 37°C at a relative humidity of 96%. Degradation was visually evaluated.
++ : total degradation of the polyester within 14 days;
+ : total degradation of the polyester within 28 days;
- : incomplete degradation of the polyester even after 28 days.

### Ease of production (of the polyester):

The properties of the polymerisation mixture have been evaluated
++ : little stirring resistance and almost all polyester can be recovered from the reactor without effort;
+ : little stirring resistance and at least 60 % of the polyester can be recovered from the reactor without effort;
- : high stirring resistance and less than 40% of the polyester can be recovered from the reactor without effort.

The results of these evaluations are compiled in tables 2 and 3 below.

**Table 2.**

| Example | 1.7 | 1.8 | 1.9 | 1.10 |
|---|---|---|---|---|
| VN [mL/g] | 80 | 110 | 190 | 250 |
| Biodegradability | ++ | ++ | ++ | ++ |
| Production | ++ | ++ | ++ | ++ |

**Table 3.**

| Example | 1.12 | 1.13 | 1.14 |
|---|---|---|---|
| gycerol content [% (w/w)] | 0.5 | 1.5 | 2.0 |
| Biodegradability | ++ | ++ | ++ |
| Production | ++ | ++ | + |

## Claims

1. The use of a polyester which comprises as polyester-forming components in condensed form
a) at least one aliphatic dicarboxylic acid,
b) at least one aliphatic diol and
c) at least one compound having at least three groups capable of ester formation in an amount of from 0.1 to 10.0% by weight, based on the total weight of components a) and b),
wherein the polyester comprises the components a) and b) in an amount of at least 80% by weight, based on the total weight of the polyester, as an elastomer for gum bases.

2. The use as claimed in claim 1, wherein the aliphatic dicarboxylic acid is selected from α, ω-alkane dicarboxylic acid having from 4 to 18 carbon atoms.

3. The use as claimed in claim 2, wherein the aliphatic dicarboxylic acid is selected from succinic acid, adipic acid or sebacic acid.

4. The use as claimed in any one of the preceding claims, wherein the aliphatic diol is selected from aliphatic diols having at least one branching point, a saturated cyclic partial structure and/or at least one ether group.

5. The use as claimed in claim 4, wherein the aliphatic diol is selected from propan-1,2-diol, 2,2-dimethylpropane-1,3-diol, diethylene glycol, triethylene glycol, tetraethylene glykol or 1,4-cyclohexanedimethanol.

6. The use as claimed in any one of the preceding claims, wherein the polyester contains the components a) and b) in a molar ratio a) : b) of from 0.95 : 1 to 1.05 : 1.

7. The use as claimed in any one of the preceding claims, wherein the compound having at least three groups capable of ester formation is selected from tartaric acid, citric acid, malic acid, trimethylolpropane, trimethylolethane, pentaerythritol, polyethertriols, glycerol, trimesic acid, trimellitic acid, pyromellitic acid and hydroxyisophthalic acid.

8. The use as claimed in claim 7, wherein the compound having at least three groups capable of ester formation is selected from glycerol or pentaerythritol.

9. The use as claimed in any of the preceding claims, wherein the polyester contains the component c) in an amount of from 0.2 to 5.0% by weight, based on the total weight of the polyester.

10. The use as claimed in any one of the preceding claims, wherein the polyester has a viscosity number in the range of from 140 to 300 mL/g.

11. The use as claimed in any one of the preceding claims, wherein the polyester has a polydispersity index (Mw/Mn) of at least 2.

12. The use as claimed in any one of the preceding claims, wherein the polyester comprises not more than 20% by weight of an aromatic dicarboxylic acid based on the total weight of the polyester-forming components.

13. The use as claimed in any one of the preceding claims, wherein the polyester comprises not more than 10% by weight of one or more aromatic dicarboxylic acids based on the total weight of the polyester-forming components.

14. The use as claimed in any one of the preceding claims, wherein the polyester comprises the components a) and b) in an amount of at least 90% by weight, based on the total weight of the polyester.

15. The use as claimed in any one of the preceding claims, wherein the polyester comprises the components a) and b) in an amount of 95 to 99.8% by weight, based on the total weight of the polyester.

16. The use as claimed in any one of the preceding claims, wherein the polyester is made up of 98 to 99.9% by weight of components a), b) and c).

17. The use as claimed in any one of the preceding claims, wherein the polyester has a viscosity number in the range of from 140 to 500 mL/g.

## Patentansprüche

1. Verwendung eines Polyesters, welcher als Polyester bildende Komponenten in kondensierter Form
a) mindestens eine aliphatische Dicarbonsäure,
b) mindestens ein aliphatisches Diol und
c) mindestens eine Verbindung mit mindestens drei Gruppen, die zu einer Esterbildung in der Lage sind, in einer Menge von 0,1 bis 10,0 Gew.-% basierend auf dem Gesamtgewicht der Komponenten a) und b)
umfasst, wobei der Polyester die Komponenten a) und b) in einer Menge von mindestens 80 Gew.-% basierend auf dem Gesamtgewicht des Polyesters umfasst, als ein Elastomer für Gummigrundlagen.

2. Verwendung nach Anspruch 1, wobei die aliphatische Dicarbonsäure aus α,ω-Alkandicarbonsäuren mit 4 bis 18 Kohlenstoffatomen ausgewählt ist.

3. Verwendung nach Anspruch 2, wobei die aliphatische Dicarbonsäure aus Bernsteinsäure, Adipinsäure oder Sebacinsäure ausgewählt ist.

4. Verwendung nach einem der vorangegangenen Ansprüche, wobei das aliphatische Diol aus aliphatischen Diolen mit mindestens einer Verzweigungsstelle, einer gesättigten cyclischen Teilstruktur und/oder mindestens einer Ethergruppe ausgewählt ist.

5. Verwendung nach Anspruch 4, wobei das aliphatische Diol aus Propan-1,2-diol, 2,2-Dimethylpropan-1,3-diol, Diethylenglycol, Triethylenglycol, Tetraethylenglycol oder 1,4-Cyclohexandimethanol ausgewählt ist.

6. Verwendung nach einem der vorangegangenen Ansprüche, wobei der Polyester die Komponenten a) und b) in einem Molverhältnis a):b) von 0,95:1 bis 1,05:1 enthält.

7. Verwendung nach einem der vorangegangenen Ansprüche, wobei die Verbindung mit mindestens drei Gruppen, die zu einer Esterbildung in der Lage sind, aus Weinsäure, Citronensäure, Äpfelsäure, Trimethylolpropan, Trimethylolethan, Pentaerythritol, Polyethertriolen, Glycerol, Trimesinsäure, Trimellithsäure, Pyromellithsäure und Hydroxyisophthalsäure ausgewählt ist.

8. Verwendung nach Anspruch 7, wobei die Verbindung mit mindestens drei Gruppen, die zu einer Esterbildung in der Lage sind, aus Glycerol oder Pentaerythritol ausgewählt ist.

9. Verwendung nach einem der vorangegangenen Ansprüche, wobei der Polyester die Komponente c) in einer Menge von 0,2 bis 5,0 Gew.-% basierend auf dem Gesamtgewicht des Polyesters enthält.

10. Verwendung nach einem der vorangegangenen Ansprüche, wobei der Polyester eine Viskositätszahl im Bereich von 140 bis 300 ml/g aufweist.

11. Verwendung nach einem der vorangegangenen Ansprüche, wobei der Polyester einen Polydispersitätsindex (Mw/Mn) von mindestens 2 hat.

12. Verwendung nach einem der vorangegangenen Ansprüche, wobei der Polyester nicht mehr als 20 Gew.-% einer aromatischen Dicarbonsäure basierend auf dem Gesamtgewicht der Polyester bildenden Komponenten umfasst.

13. Verwendung nach einem der vorangegangenen Ansprüche, wobei der Polyester nicht mehr als 10 Gew.-% von einer oder mehreren aromatischen Dicarbonsäure(n) basierend auf dem Gesamtgewicht der Polyester bildenden Komponenten umfasst.

14. Verwendung nach einem der vorangegangenen Ansprüche, wobei der Polyester die Komponenten a) und b) in einer Menge von mindestens 90 Gew.-% basierend auf dem Gesamtgewicht des Polyesters umfasst.

15. Verwendung nach einem der vorangegangenen Ansprüche, wobei der Polyester die Komponenten a) und b) in einer Menge von 95 bis 99,8 Gew.-% basierend auf dem Gesamtgewicht des Polyesters umfasst.

16. Verwendung nach einem der vorangegangenen Ansprüche, wobei der Polyester aus 98 bis 99,9 Gew.-% der Komponenten a), b) und c) gebildet wird.

17. Verwendung nach einem der vorangegangenen Ansprüche, wobei der Polyester eine Viskositätszahl im Bereich von 140 bis 500 ml/g aufweist.

## Revendications

1. Utilisation d'un polyester qui comprend en tant que composants formant un polyester sous une forme condensée
a) au moins un acide dicarboxylique aliphatique,
b) au moins un diol aliphatique et
c) au moins un composé comprenant au moins trois groupes capables de former un ester en une quantité de 0,1 à 10,0 % en poids, par rapport au poids total des composants a) et b),
dans laquelle le polyester comprend les composants a) et b) en une quantité d'au moins 80 % en poids, par rapport au poids total du polyester,
en tant qu'élastomère pour bases de gomme.

2. Utilisation selon la revendication 1, dans laquelle l'acide dicarboxylique aliphatique est choisi parmi un acide α,ω-alcane-dicarboxylique comportant de 4 à 18 atomes de carbone.

3. Utilisation selon la revendication 2, dans laquelle l'acide dicarboxylique aliphatique est choisi parmi l'acide succinique, l'acide adipique ou l'acide sébacique.

4. Utilisation selon l'une quelconque des revendications précédentes, dans laquelle le diol aliphatique est choisi parmi les diols aliphatiques comprenant au moins un point de ramification, une structure partielle cyclique saturée et/ou au moins un groupe éther.

5. Utilisation selon la revendication 4, dans laquelle le diol aliphatique est choisi parmi le propan-1,2-diol, le 2,2-diméthylpropane-1,3-diol, le diéthylène glycol, le triéthylène glycol, le tétraéthylène glycol ou le 1,4-cyclohexanediméthanol.

6. Utilisation selon l'une quelconque des revendications précédentes, dans laquelle le polyester contient les composants a) et b) dans un rapport molaire a) : b) de 0,95 : 1 à 1,05 : 1.

7. Utilisation selon l'une quelconque des revendications précédentes, dans laquelle le composé comprenant au moins trois groupes capables de former un ester est choisi parmi l'acide tartrique, l'acide citrique, l'acide malique, le triméthylolpropane, le triméthyloléthane, le pentaérythritol, les polyéthertriols, le glycérol, l'acide trimésique, l'acide trimellitique, l'acide pyromellitique et l'acide hydroxyisophtalique.

8. Utilisation selon la revendication 7, dans laquelle le composé comprenant au moins trois groupes capables de former un ester est choisi parmi le glycérol ou le pentaérythritol. 1.

9. Utilisation selon l'une quelconque des revendications précédentes, dans laquelle le polyester contient le composant c) en une quantité de 0,2 à 5,0 % en poids, par rapport au poids total du polyester.

10. Utilisation selon l'une quelconque des revendications précédentes, dans laquelle le polyester a un indice de viscosité dans la plage de 140 à 300 ml/g.

11. Utilisation selon l'une quelconque des revendications précédentes, dans laquelle le polyester a un indice de polydispersité (Mp/Mn) d'au moins 2.

12. Utilisation selon l'une quelconque des revendications précédentes, dans laquelle le polyester ne comprend pas plus de 20 % en poids d'un acide dicarboxylique aromatique, par rapport au poids total des composants formant un polyester.

13. Utilisation selon l'une quelconque des revendications précédentes, dans laquelle le polyester ne comprend pas plus de 10 % en poids d'un ou de plusieurs acides dicarboxyliques aromatiques, par rapport au poids total des composants formant un polyester.

14. Utilisation selon l'une quelconque des revendications précédentes, dans laquelle le polyester comprend les composants a) et b) en une quantité d'au moins 90 % en poids, par rapport au poids total du polyester.

15. Utilisation selon l'une quelconque des revendications précédentes, dans laquelle le polyester comprend les composants a) et b) en une quantité de 95 à 99,8 % en poids, par rapport au poids total du polyester.

16. Utilisation selon l'une quelconque des revendications précédentes, dans laquelle le polyester est constitué de 98 à 99,9 % en poids des composants a), b) et c).

17. Utilisation selon l'une quelconque des revendications précédentes, dans laquelle le polyester a un indice de viscosité dans la plage de 140 à 500 ml/g.
